# NEUE EUROPÄISCHE PATENTSCHRIFT

(11) **EP 0 513 707 B2**
(45) Veröffentlichungstag und Bekanntmachung des Hinweises auf die Entscheidung über den Einspruch: **20.01.1999**
(45) Hinweis auf die Patenterteilung: 12.04.1995
(21) Anmeldenummer: 92107879.6
(22) Anmeldetag: 11.05.1992
(51) Int. Cl.: C03C 17/04, C03C 17/00, C03C 8/14

(54) **Glasplatte und Verfahren zu deren Herstellung**
Glass plate and process for its manufacture
Plaque de verre et procédé pour sa production

(30) Priorität: 17.05.1991 DE 4116110
(43) Veröffentlichungstag der Anmeldung: 19.11.1992
(73) Patentinhaber: BISCHOFF GLASTECHNIK GmbH & Co. KG, D-75015 Bretten (DE)
(72) Erfinder: Bischoff, Gerd, W-7518 Bretten (DE); Beyle, Hans Peter, W-7518 Bretten (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 313 904
- CH-A- 1 898 550
- GB-A- 2 196 624
- PATENT ABSTRACTS OF JAPAN vol. 15, no. 181 (C-830)9. Mai 1991 and JP-A-30 45 580
- DATABASE WPIL Week 42, Derwent Publications Ltd., London, GB; AN 82-89831E and SU-A-887 487
- DATABASE WPIL Week 11, Derwent Publications Ltd., London, GB; AN 85-066579 and PT-A-78 802
- Glaswelt 5/1990, Seiten 14, 15, 18
- Das grosse DUDEN-lexikon, in acht Bänden, 2.Aufl., 1969, Biblio- graphisches Institut, Mannheim/Wien/Zürich, Seite 593
- Lexikon Werkstofftechnik, Berichtigter Nachdruck 1993, VDI-Verlag Düsseldorf, S. 376, 377

## Beschreibung

Die Erfindung betrifft eine begehbare Glasplatte mit einer auf einer Glasscheibe aufgebrachten Oberflächenbeschichtung und ein Verfahren zur Herstellung einer solchen begehbaren Glasplatte.

Bekannt sind Glasplatten als Tanzböden, also betanzbare Glasplatten. Diese weisen keine Oberflächenbeschichtung auf. Sie müssen zur Erfüllung ihrer Funktion relativ glatt sein, damit die Tanzbewegung nicht gebremst und behindert wird. Gerade deswegen können einfache Glasplatten nicht zum Begehen eingesetzt werden, da hier eine erhebliche Rutschgefahr und damit Unfall- und Verletzungsgefahr besteht. Dies gilt insbesondere für den Außenbereich, in dem Feuchtigkeit auftreten kann und die genannten Gefahren vergrößert. Glastanzböden können daher nicht als begehbare Glasplatten bezeichnet werden. Glasplatten konnten also bisher nicht als begehbarer Untergrund eingesetzt werden. Man könnte daran denken, Glasplatten durch Anätzen aufzurauhen. Es hat sich aber herausgestellt, daß hierdurch die Rutschgefahr nicht zu vermindern ist, insbesondere wenn die Platten feucht sind, umso mehr, als die Rauhigkeit einer derart aufgerauhten Glasplatte sich mit der Zeit wieder vermindert und glättet.

Es sind beschichtete Dekorplatten aus Glas bekannt. Bei diesen weist die Beschichtung keine hinreichende Haftung und/oder ebenfalls eine zu große Gäbe, insbesondere bei Feuchtigkeit, auf.

Der Erfindung liegt daher die Aufgabe zugrunde, unter Vermeidung der genannten Nachteile, eine Glasplatte und ein Verfahren zu deren Herstellung dahingehend zu schaffen, daß die Glasplatte in jedem Fall und unter allen Bedingungen, insbesondere auch im feuchten oder nassen Zustand, eine zuverlässige und sichere Begehbarkeit ohne Rutschgefahr gewährleistet.

Erfindungsgemäß wird die genannte Aufgabe bei einer gattungsgemäßen Glasplatte durch den Gegenstand des Anspruchs 1 gelöst gelöst. Ein erfindungsgemäßes Verfahren sieht vor, die Maßnahmen des Anspruchs 15 sur lösung der Aufgabe.

Bei der erfindungsgemäßen Glasplatte umschließt das Glasfrittenmaterial die scharfkantigen Teilchen vollauf oder zumindestens über einen erheblichen Teil des Umfanges. Hierdurch wird eine ausgezeichnete Haftung der Partikelteilchen in der Glasfritte und mit dieser auf der Glasscheibe gewährleistet. Die Glasfritte bildet eine dünne Schicht auf der aus der Masse, in die Partikel eingelagert sind, herausragenden Oberflächenkontur der Partikel, so daß selbst, wenn die Glasfritte die Partikel auch auf diesem überstehenden Bereich umschließt, die Rauhigkeit der gesamten Oberfläche und damit die Rutschverminderung gewährleistet bleibt. Selbst wenn aus der Masse der Glasfritte herausstehende spitzen nicht völlig, d.h. in ihrem obersten Bereich nicht durch Glasfritten umschlossen sind, so werden diese dennoch zuverlässig gehalten, da die Glasfritte die Partikel auch durch eine dünne Schicht auf den nach oben bzw. nach außen gerichteten Bereichen umfaßt, wenn auch nicht vollständig.

Die Erfindung schafft eine begehbare Glasplatte, die Sicherheitsanforderungen vor allem hinsichtlich der Rutschfestigkeit genügt, insbesondere auch bei Feuchtigkeit. Durch die Verwendung von Glas ist eine hinreichende Tragfähigkeit bei vertretbarer Dicke und darüber hinaus eine Transparenz oder Transluzenz gegeben, die die erfindungsgemäße Glasplatte vielfältigen Einsatzmöglichkeiten zugänglich macht. Dies gilt insbesondere, wenn in bevorzugter Ausgestaltung auch die Oberflächenbeschichtung transluzent ist. Dies wird dadurch erreicht, daß die Partikel nur zu einem geringeren Anteil in der Oberflächenbeschichtung enthalten sind. Eine hinreichende Transluzenz ist gewährleistet. Dies ist auch weiterhin gegeben, wenn die Fritte in üblicher Weise Keramikpigmente enthält, also letztendlich auf die Glasscheibe aufgedruckte und eingebrannte Keramikfarbe ist.

Überraschenderweise hat sich herausgestellt, daß gegenüber einem Aufrauhen der Oberfläche einer Glasplatte ein Aufbringen einer Beschichtung eine wesentliche höhere Standzeit hat und insbesondere praktisch nicht eine Reduzierung des Reibungskoeffizienten mit der Zeit, also ein Glätten der Rauhigkeiten ausgesetzt ist. In bevorzugter Ausgestaltung ist dabei vorgesehen, daß die Oberflächenbeschichtung scharfkantige Partikel in einem diese haltenden Haftmaterial aufweist. Es können verschiedenartige Haftmaterialien eingesetzt werden. Bevorzugte Ausgestaltungen sehen vor, daß das Haftmaterial eine nach Mischen mit den scharfkantigen Partikeln auf die Oberseite der Glasplatte aufgeschmolzene Glasfritte ist oder daß das Haftmaterial eine nach Vermischen mit den scharfkantigen Partikeln auf die Oberseite der Glasscheibe aufgedruckte Keramikfarbe ist. Während grundsätzlich vorgesehen sein kann, daß die Oberflächenbeschichtung feinkörnigen Sand enthält, hat sich als optimal herausgestellt, daß die Oberflächenbeschichtung feinkörnigen Bims enthält. Bimssand kann insbesondere in Verbindung mit Glasfritte als Haftmaterial eingesetzt werden. Wenn die Glasfritte im Bereich von 700° aufgeschmolzen wird, so wird hierdurch das verwendete Partikelmaterial, wie Aluminiumoxid oder Bims nicht beeinträchtigt und behält seine Rauhigkeit, Körnigkeit und Scharfkantigkeit. Die fraglichen Materialien der Partikel haben eine hinreichende Temperaturbeständigkeit.

Erfindungsgemäß ist, die Korngröße relativ gering. Während ein Reibungskoeffizient von 0,4 auch in feuchtem Zustand an sich hinreichend ist, sehen bevorzugte Ausgestaltungen vor, daß der Reibungskoeffizient der erfindungsgemäßen Glasplatte mehr als 0,8 und bis zu 2,0 beträgt, wobei solche Reibungskoeffizienten mit den vorgenannten Materialien ohne weiteres auch im feuchten Zustand der Platte gewährleistbar sind.

Während die Glasplatte grundsätzlich eine Einzelscheibe aufweisen kann, sieht eine bevorzugte Ausgestaltung vor, daß sie eine Verbundglasscheibe aus zwei oder mehreren Einzelscheiben aufweist.

In der Regel sollte die Glasplatte eine Dicke von mehr als 6 mm aufweisen. Sie kann dabei in einer Größenordnung von bis zu 12 mm eingesetzt werden, ohne eine Tragfunktion aufzuweisen, wenn sie also vollständig aufliegt. In bevorzugter Ausgestaltung ist aber vorgesehen, daß ihre Stärke mehr als 12 mm beträgt. In diesem Falle kann die Glasplatte eine Tragfunktion übernehmen, wobei allerdings bis zu einer Stärke von 18 mm die Absturzhöhe unterhalb baurechtlicher Zulassungserfordernisse liegen sollte. Gemäß äußerst bevorzugten Ausgestaltung ist weiterhin vorgesehen, daß ihre Stärke mehr als 18 mm beträgt. In diesem Falle kann die Glasplatte auch in Absturzhöhen eingesetzt werden, die eine baurechtliche Zulassung bzw. Einzelzulassung erfordern, da sie den entsprechenden Voraussetzungen genügt.

Soweit die Glasplatte eine Tragfunktion übernimmt, sieht eine äußerst bevorzugte Ausgestaltung vor, daß sie mit seitlichen elastischen Lagern versehen ist, wobei weiterhin die elastischen Lager im Randbereich auf der der Beschichtung abgewandten Seite der Glasscheibe angeordnete Streifenlager sind. Die Lager können auf geeigneter Elastomer- oder auch auf Silikon-Basis beruhen.

Ein erfindungsgemäßes Verfahren zeichnet sich dadurch aus, daß ein Haftmaterial mit scharfkantigen Partikeln vermischt und anschließend auf einer Glasscheibe aufgebracht wird wobei das Haftmaterial eine Glasfritte ist, die durch Aufschmelzen auf die Glasscheibe auf dieser aufgebracht wird, die auf die Glasscheibe aufgedruckt wird.

Die Erfindung bietet nicht nur die Möglichkeit, die in der erfindungsgemäßen Weise ausgebildeten Glasplatten als solche unter beliebigen Bedingungen als begehbare Platten mit hinreichender Rutschrestigkeit einzusetzen. Die Beschichtung kann dabei noch weitere Funktionen übernehmen. So bewirkt eine Oberflächenbeschichtung aus Glasfritte mit eingelagerten Bims- oder Sandkörnern einen Mattglaseffekt, durch den von der der Beschichtung abgewandten Seite her eine Beleuchtung erfolgen kann. Sowohl die Glasfritte aber auch die Keramikfarben können in weiten Bereichen eingefärbt sein. Es können daher Muster oder Strukturen auf die Glasscheibe aufgebracht werden, wie Werbeinformationen oder Hinweisinformationen, Pfeile oder dergleichen, wobei auch zur Erhöhung des Aufmerksamkeitswertes ebenfalls eine Beleuchtung von der Unterseite her erfolgen kann. Die erfindungsgemäß beschichtete rutschfeste begehbare Glasscheibe ermöglicht eine weite Breite von Einsatzzwecken.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine erfindungsgemäß ausgestaltete Glasplatte in eingebautem Zustand; und
- Fig. 2: in vergrößerter Darstellung die Einbindung von Partikeln in Frittenmaterial.

Die erfindungsgemäße Glasplatte 1 besteht zunächst aus einer Glasscheibe 2. Die Glasscheibe 2 kann eine Einfachglasscheibe oder aber eine herkömmliche Verbundglasscheibe sein. Während die erfindungsgemäße begehbare Glasplatte 1 grundsätzlich in Stärken von 6 mm aufwärts verwendet werden kann, muß die in der Figur dargestellte frei tragende Glasplatte 1 eine Stärke von mindestens 12 mm aufweisen. Die erforderliche Stärke ist abhängig von den gewünschten Stützweiten bei aufzunehmenden Verkehrslasten und gegebenenfalls der Glaskonfiguration. So lassen sich mit Glasdicken von 34 mm bei erheblicher Belastung Stützweiten von bis zu 2 m erzielen, während die Stützweite bei einer Verkehrslast von 5,0 kN/m² noch nahezu 1,2 m beträgt.

Auf der Glasscheibe 1 ist eine rutschhindernde Beschichtung 3 mit einem Flächengewicht von 35 g/m² aufgebracht, - wobei grundsätzlich Flächengewichte zwischen 15 und 50 g/m² vorteilhaft sind - die in bevorzugter Ausgestaltung aus einer aufgebrachten Glasfritte besteht, die mit 10 % (bezogen auf die Gesamtmasse) feinem Bimssand mit Korngrößen in der Größenordnung von 10 µm vermischt ist. Die Glasfritte wurde nach dem Vermischen mit dem Bimssand bei einer Temperatur von ca. 500° auf die Glasscheibe 2 aufgeschmolzen, wobei die Fritte kochflüssig ist, so daß sie die Partikel gut umfließen kann. Eine solche Temperatur zum Aufschmelzen der Glasfritte beeinträchtigt den Bimssand nicht, der selbst aus Lavamassen bei ca. 1000° entstanden ist.

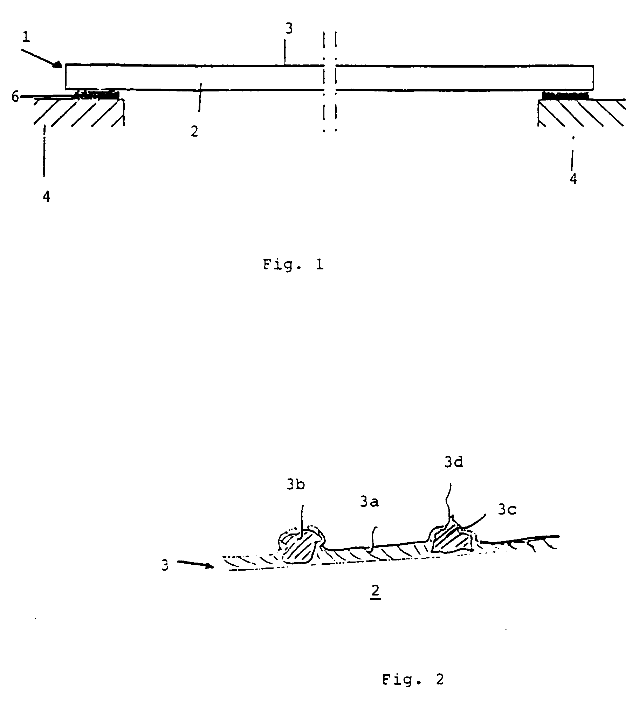

Aus der Figur 2 ist ersichtlich, wie das Frittenmaterial 3a der Beschichtung 3 einzelne Partikel 3b, 3c umgibt. Das Partikel 3b ist vom Frittenmaterial 3a vollständig, d.h. auch auf seiner Oberfläche vollauf umschlossen, während bei dem Partikel 3c eine Spitze 3d aus dem Frittenmaterial herausragt, wenn dieses durchaus auch nach oben, d.h. von der Glasscheibe 2 fortgerichtete Bereiche der Partikel 3c zumindestens teilweise mitüberdeckt.

Das Haftmaterial ist Glasfritte, in der auch scharfkantige Körner aus anderem Material als Bims, beispielsweise fein gemahlene Sandkörner, eingelagert sind. Diese sollten eine mittlere Größe in dem oben genannten Bereich haben; die Größe sollte 250 µm nicht überschreiten, wobei Größen von bis zu 40 µm, besser noch unter 20 µm am vorteilhaftesten sind.

Die Glasplatte 2 ist in der dargestellten Figur auf Tragelementen 4 in ihrem Randbereich aufgesetzt, wobei zwischen der Glasplatte 2 und den Tragelementen 4 Elastomerlager 6 angeordnet sind, um einen direkten Kontakt zwischen der Glasplatte 2 und den Tragelementen 4 aus Metall oder Beton zu vermeiden. Die Elastomerlager können als Streifenlager mit einer Dicke von beispielsweise 5 mm und einer Breite von 25 mm ausgebildet sein.

Während für den Einsatz von Bodenmaterialien im Freien Haftkoeffizienten ab 0,4 bei üblichen Prüfmaterialien, wie Leder, Hartgummi, Mikrozellgummi, PU, PVC, ausreichend sind, hat sich überraschenderweise ergeben, daß die erfindungsgemäße Glasplatte mit der oben genannten Beschichtung Gleitreibungskoeffizienten selbst im nassen Zustand von mehr als 0,8 aufweist, auch wenn die rutschhemmende Beschichtung nicht auf der gesamten Glasfläche, sondern nur mit einem geringeren Beschichtungsgrad von beispielsweise 30 % in einem Muster aufgebracht ist, wobei allerdings die beschichteten Stellen eng beieinander liegen müssen, also das Muster kleinflächig sein muß. Während eine rutschhemmende Beschichtung in der beschriebenen Weise aus Glasfritte einen Mattglaseindruck hervorruft und von unten beleuchtet sein kann, kann die Beschichtung auch gefärbt sein, es können Bereiche gefärbt sein, um in der Beschichtung Werbeaussagen oder Informationen, wie Hinweiszeichen oder dergleichen einzulagern.

## Patentansprüche

1. Begehbare Glasplatte mit einer auf einer Glasscheibe (2) aufgebrachten Oberflächenbeschichtung (3), dadurch gekennzeichnet, daß die Oberflächenbeschichtung (3) eine auf die Glasscheibe (2) aufgebrachte und eingebrannte, scharfkantige Partikel (3b, 3c) enthaltende Glasfritte ist, daß der Anteil der scharfkantigen Partikel (3b, 3c) 5 bis 30 % der Beschichtung (3) beträgt und daß bei einer maximalen Korngröße von 250 µm die mittlere Korngröße der scharfkantigen Partikel (3b, 3c) im Bereich von 50 µm liegt.

2. Glasplatte nach Anspruch 1, dadurch gekennzeichnet, daß die Oberflächenbeschichtung (3) feinkörnige Partikel aus der Gruppe der Silikate oder Metall-Oxide (z. B. Al₂O₃), einschließlich Mischungen dieser und/oder Silizium-Oxid (z. B. Bims) aufweist.

3. Glasplatte nach einem der Ansprüche 1 bis 2, dadurch gekennzeichnet, daß die Oberflächehbeschichtung (3) als Partikel (3b, 3c) feinkörnige Sandkörner enthält.

4. Glasplatte nach einem der Ansprüche 1 bis 3, dadurch gekennzeichnet, daß die Oberflächenbeschichtung (3) transluzent ist.

5. Glasplatte nach einem der Ansprüche 1 bis 4, dadurch gekennzeichnet, daß die Oberflächenbeschichtung (3) einen Reibungskoeffizienten von mehr als 0,4 hat.

6. Glasplatte nach einem der vorangehenden Ansprüche, dadurch gekennzeichnet, daß der Reibungskoeffizient mehr als 0,8 beträgt.

7. Glasplatte nach einem der vorangehenden Ansprüche, dadurch gekennzeichnet, daß der Reibungskoeffizient bis zu 2,0 beträgt.

8. Glasplatte nach einem der vorangehenden Ansprüche, dadurch gekennzeichnet, daß das Flächengewicht der Beschichtung zwischen 15 und 50 g/m² beträgt.

9. Glasplatte nach einem der vorangehenden Ansprüche, dadurch gekennzeichnet, daß sie eine Verbundglasscheibe aus zwei oder mehreren Einzelscheiben aufweist.

10. Glasplatte nach einem der vorangehenden Ansprüche, dadurch gekennzeichnet, daß ihre Stärke mehr als 6 mm beträgt.

11. Glasplatte nach Anspruch 10, dadurch gekennzeichnet, daß ihre Stärke mehr als 12 mm beträgt.

12. Glasplatte nach Anspruch 11, dadurch gekennzeichnet, daß ihre Stärke mehr als 18 mm beträgt.

13. Glasplatte nach einem der vorangehenden Ansprüche, dadurch gekennzeichnet, daß sie mit seitlichen elastischen Lagern versehen sind.

14. Glasplatte nach Anspruch 13, dadurch gekennzeichnet, daß die elastischen Lager im Randbereich auf der der Beschichtung (3) abgewandten Seite der Glasscheibe (2) angeordnete Streifenlager (6) sind.

15. Verfahren zur Herstellung einer begehbaren Glasplatte, dadurch gekennzeichnet, daß 95 bis 70 Gewichtsteile Glasfrittenmaterial mit 5 bis 30 Gewichtstellen scharfkantiger Partikel (3b, 3c) mit einer maximalen Korngröße von 250 µm und einer mittleren Korngröße im Bereich von 50 µm vermischt, anschließend auf einer Glasscheibe (2) als Oberflächenbeschichtung (3) aufgebracht und aufgeschmolzen werden.

16. Verfahren nach Anspruch 15, dadurch gekennzeichnet, daß 5 bis 30 Gewichtsteile Partikel mit 95 bis 70 Gewichtsteilen Fritte vermischt werden.

17. Verfahren nach Anspruch 15 oder 16, dadurch gekennzeichnet, daß scharfkantige Partikel aus der Gruppe der Silikate oder Metalloxide (wie Al₂O₃) einschließlich Mischungen dieser und/oder Silizium-Oxid (wie Bims) verwendet werden.

18. Verfahren nach einem der Ansprüche 15 bis 17, dadurch gekennzeichnet, daß die Fritte Keramikpigmente enthält.

19. Verfahren nach einem der Ansprüchen 15 bis 18, dadurch gekennzeichnet, daß die Oberflächenbeschichtung mit einer Flächendichte von 15 bis 50 g/m² aufgebracht wird.

## Claims

1. Step-on glass plate with a surface coating (3) applied to a glass pane (2), characterized in that the surface coating (3) is a glass frit containing sharp-edged particles (3b, 3c), applied to and fired on the glass pane (2), that the proportion of sharp-edged particles (3b, 3c) is 5 to 30% of the coating (3) and that for a maximum particle size of 250 µm, the average particle size of the sharp-edged particles (3b, 3c) is approximately 50 µm.

2. Glass plate according to claim 1, characterized in that the surface coating (3) has fine-grained particles from the group of silicates or metal oxides (e.g. Al₂O₃), including mixtures thereof and/or silicon dioxide (e.g. pumice).

3. Glass plate according to one of the claims 1 and 2, characterized in that the surface coating (3) contains as particles (3b, 3c) fine-grained sand particles.

4. Glass plate according to one of the claims 1 to 3, characterized in that the surface coating (3) is translucent.

5. Glass plate according to one of the claims 1 to 4, characterized in that the surface coating (3) has a friction coefficient of more than 0.4.

6. Glass plate according to one of the preceding claims, characterized in that the friction coefficient is above 0.8.

7. Glass plate according to one of the preceding claims, characterized in that the friction coefficient is up to 2.0.

8. Glass plate according to one of the preceding claims, characterized in that the weight per unit area of the coating is between 15 and 50 g/m².

9. Glass plate according to one of the preceding claims, characterized in that it has a composite glass pane formed from two or more individual panes.

10. Glass plate according to one of the preceding claims, characterized in that its thickness is above 6 mm.

11. Glass plate according to claim 10, characterized in that its thickness is above 12 mm.

12. Glass plate according to claim 11, characterized in that its thickness is above 18 mm.

13. Glass plate according to one of the preceding claims, characterized in that it is provided with lateral elastic bearings.

14. Glass plate according to claim 13, characterized in that the elastic bearings are strip bearings (6) arranged in the marginal area on the side of the glass pane (2) remote from the coating (3).

15. Process for the production of a step-on glass plate, characterized in that 95 to 70 parts by weight of glass frit material are mixed with 5 to 30 parts by weight of sharp-edged particles (3b, 3c) having a maximum particle size of 250 um and an average particle size of approximately 50 um, followed by application to and melting on a glass pane (2) as a surface coating (3).

16. Process according to claim 15, characterized in that 5 to 30 parts by weight of particles are mixed with 95 to 70 parts by weight of frit.

17. Process according to claim 15 or 16, characterized in that use is made of sharp-edged particles from the group of silicates or metal oxides (such as Al₂O₃), including mixtures thereof and/or silicon dioxide (such as pumice).

18. Process according to one of the claims 15 to 17, characterized in that the frit contains ceramic pigments.

19. Process according to one of the claims 15 to 18, characterized in that the surface coating is applied with a surface density of 15 to 50 g/m².

## Revendications

1. Panneau de verre sur lequel on peut marcher comportant un enduit de surface (3) appliqué sur une plaque de verre (2), caractérisé en ce que l'enduit de surface (3) est une fritte de verre appliquée et cuite sur la plaque de verre et contenant des particules à arêtes vives (3b,3c), en ce que la proportion de particules à arêtes vives (3b,3c) représente entre 5 et 30 % de l'enduit (3) et en ce que pour une granulométrie maximale de 250 µm, la granulométrie moyenne des particules à arêtes vives (3b,3c) se situe aux environs de 50 µm.

2. Panneau de verre selon la revendication 1, caractérisé en ce que l'enduit de surface (3) présente des particules de faible granulométrie appartenant au groupe des silicates ou des oxydes de métaux (par exemple Al₂O₃), y compris les combinaisons de ceux-ci et/ou des oxydes de silicium (par exemple de la ponce).

3. Panneau de verre selon l'une quelconque des revendications 1 à 2, caractérisé en ce que l'enduit de surface (3) contient en tant que particules (3b,3c) des grains de sable de faible granulométrie.

4. Panneau de verre selon l'une quelconque des revendications 1 à 3, caractérisé en ce que l'enduit de surface (3) est translucide.

5. Panneau de verre selon l'une quelconque des revendications 1 à 4, caractérisé en ce que le coefficient de frottement de l'enduit de surface (3) est supérieur à 0,4.

6. Panneau de verre selon l'une quelconque des revendications précédentes, caractérisé en ce que le coefficient de frottement est supérieur à 0,8.

7. Panneau de verre selon l'une quelconque des revendications précédentes, caractérisé en ce que le coefficient de frottement peut atteindre 2,0.

8. Panneau de verre selon l'une quelconque des revendications précédentes, caractérisé en ce que la masse surfacique de l'enduit de surface est comprise entre 15 et 50 g/m².

9. Panneau de verre selon l'une quelconque des revendications précédentes, caractérisé en ce qu'il est constitué d'une plaque de verre composite formée de deux ou plusieurs plaques individuelles.

10. Panneau de verre selon l'une quelconque des revendications précédentes, caractérisé en ce que son épaisseur est supérieure à 6 mm.

11. Panneau de verre selon la revendication 10, caractérisé en ce que son épaisseur est supérieure à 12 mm.

12. Panneau de verre selon la revendication 11, caractérisé en ce que son épaisseur est supérieure à 18 mm.

13. Panneau de verre selon l'une quelconque des revendications précédentes, caractérisé en ce qu'il est pourvu de supports latéraux élastiques.

14. Panneau de verre selon la revendication 13, caractérisé en ce que les supports élastiques disposés au voisinage du rebord sur la face de la plaque de verre (2) opposée à l'enduit de surface (3) consistent en des bandes (6).

15. Procédé de production d'un panneau de verre sur lequel on peut marcher, caractérisé en ce que 95 à 70 parties en poids de fritte de verre sont mélangées avec 5 à 30 parties en poids de particules à arêtes vives (3b,3c) dont la granulométrie maximale est de 250 µm et la granulométrie moyenne d'environ 50 µm, puis appliquées et fondues sur une plaque de verre (2) en tant qu'enduit de surface (3).

16. Procédé selon la revendication 15, caractérisé en ce que l'on mélange 5 à 30 parties en poids de particules à 95 à 70 parties en poids de fritte.

17. Procédé selon l'une des revendications 15 ou 16, caractérisé en ce que l'on utilise des particules à arêtes vives appartenant au groupe des silicates ou des oxydes de métaux (par exemple AL₂0₃) y compris les combinaisons de ceux-ci et/ou des oxydes de silicium (par exemple de la ponce).

18. Procédé selon l'une quelconque des revendications 15 à 17, caractérisé en ce que la fritte contient des pigments céramiques,

19. Procédé selon l'une quelconque des revendications 15 à 18, caractérisé en ce que l'enduit de surface est appliqué selon une densité surfacique de 15 à 50 g/m².
